# EUROPÄISCHE PATENTSCHRIFT

(11) **EP 1 982 240 B1**
(45) Veröffentlichungstag und Bekanntmachung des Hinweises auf die Patenterteilung: **13.05.2009**
(21) Anmeldenummer: 07702388.5
(22) Anmeldetag: 25.01.2007
(51) Int. Cl.: G05B 13/02, G05B 11/42

(54) **VERFAHREN ZUR EINREGELUNG EINES SICH IN EINEM ZYKLUS ÄNDERNDEN SYSTEMS AUF EIN NICHTKONSTANTES ZYKLISCHES SOLLPROFIL UND REGLER HIERFÜR**
METHOD FOR ADJUSTING A SYSTEM THAT IS MODIFIED IN A CYCLE TO A NON-CONSTANT CYCLICAL TARGET PROFILE AND CONTROLLER THEREFOR
PROCÉDÉ PERMETTANT DE RÉGLER UN SYSTÈME VARIABLE DANS UN CYCLE À UN PROFIL THÉORIQUE CYCLIQUE NON CONSTANT ET DISPOSITIF DE RÉGLAGE CORRESPONDANT

(30) Priorität: 08.02.2006 DE 102006005972
(43) Veröffentlichungstag der Anmeldung: 22.10.2008
(73) Patentinhaber: Otto Bock HealthCare GmbH, 37115 Duderstadt (DE)
(72) Erfinder: LAATSCH, Erik, 37077 Göttingen (DE)
(74) Vertreter: Lins, Edgar
(86) Internationale Anmeldenummer: PCT/DE2007/000154
(87) Internationale Veröffentlichungsnummer: WO 2007/090366

(56) Entgegenhaltungen:
- US-A- 4 558 430
- KUMPATI S NARENDRA ET AL: "Adaptive Control Using Multiple Models" IEEE TRANSACTIONS ON AUTOMATIC CONTROL, IEEE SERVICE CENTER, LOS ALAMITOS, CA, US, Bd. 42, Nr. 2, Februar 1997 (1997-02), XP011000311 ISSN: 0018-9286
- ISHIDA M ET AL: "Reduction control of mechanical vibration of an induction motor with fluctuated torque load using repetitive controller" INDUSTRIAL TECHNOLOGY, 1994., PROCEEDINGS OF THE IEEE INTERNATIONAL CONFERENCE ON GUANGZHOU, CHINA 5-9 DEC. 1994, NEW YORK, NY, USA,IEEE, US, 5. Dezember 1994 (1994-12-05), Seiten 533-537, XP010147206 ISBN: 0-7803-1978-8

## Beschreibung

Die Erfindung betrifft ein Verfahren zur Einregelung eines sich in einem Zyklus ändernden Systems auf ein nichtkonstantes zyklisches Sollprofil durch Vergleichen von gemessenen Ist-Werten mit entsprechenden Soll-Werten des Sollprofils und Ausgabe eines Regelwerts.

Die Erfindung betrifft ferner einen Regler für ein sich in einem Zyklus änderndes System zur Einregelung auf ein nichtkonstantes Sollprofil.

In einfachen Anwendungsformen regeln Standardregler ein System auf einen konstanten Vorgabewert ein. Sollen sich die Vorgabewerte jedoch zyklisch ändern, also ein Vorgabeprofil abgefahren werden, muss der Regler entsprechend auf Folgung eingestellt sein. Der Aufwand hierfür ist hoch, da für unterschiedliche Kurvenformen unterschiedliche Einstellungen erforderlich sind. Ferner ist problematisch, dass der dem Vorgabeprofil folgende Rechner bezüglich seiner Regelparameter dann nicht optimal einzustellen ist, wenn unterschiedliche Frequenzanteile für die Abweichungen der Ist-Kurve von dem Soll-Profil entstehen.

Wenn ein Soll-Profil zyklisch am Regler-Solleingang vorgegeben wird, und das System über den Vorgabe-Zyklus für jeden Vorgabepunkt zu dem jeweiligen Zeitpunkt des Zyklus eine andere Antwort gibt, entsteht ein nichtlineares System, das mit einem Standardregler, beispielsweise PID-Regler, nicht mehr realisiert werden kann. Dies gilt insbesondere dann, wenn das zu regelnde System zu jedem Profilpunkt eine spezielle Sprungantwort produziert, also über den Profilverlauf für jeden Punkt eine andere Charakteristik aufweist.

Die Verwendung von beispielsweise Standard-PID-Reglern wäre jedoch wünschenswert.

KUMPATI S NARENDRA ET AL: "Adaptive Control Using Multiple Models", IEEE TRANSACTIONS ON AUTOMATIC CONTROL, Bd. 42, Nr. 2, Februar 1997, ISSN 0018-9286, zeigt eine Regelung mit verschiedenen parallel geschalteten Reglern, wobei in jedem Zeitabschnitt ein Regler adaptiv ausgewählt wird. Dies ist nicht optimal für die Regelung über ein nicht konstantes zyklisches Sollprofil.

Der vorliegenden Erfindung liegt daher die Aufgabe zugrunde, eine Regelung über ein nicht konstantes zyklisches Sollprofil unter Verwendung von herkömmlichen Standard-Reglern zu ermöglichen.

Zur Lösung dieser Aufgabe ist ein Verfahren der eingangs erwähnten Art erfindungsgemäß dadurch gekennzeichnet, dass das zyklische Sollprofil in eine vorgegebene Anzahl von Zeitabschnitten unterteilt wird, dass für jeden Zeitabschnitt ein Soll-Wert des Sollprofils vorgegeben und ein aktueller Ist Wert bestimmt wird und dass für jeden Zeitabschnitt mit einem eigenen Regler die Regelung auf der Basis von Soll-Wert und Ist-Wert gesondert ausgeführt wird.

Die Lösung der gestellten Aufgabe gelingt ferner erfindungsgemäß mit einem Regler der eingangs erwähnten Art, der gekennzeichnet ist durch eine Vielzahl von digitalen Einzelreglern, durch eine Steuerschaltung, die den Zyklus in der Anzahl der Einzelregler entsprechende Abschnitte unterteilt und jedem Einzelregler einen vorgegebenen Soll-Wert und einen gemessenen Ist Wert zuordnet, und durch eine Ausgabeanordnung für die von den Einzelreglern generierten Reglerwerte.

Erfindungsgemäß sind somit zahlreiche digitale Einzelregler vorgesehen, die jeweils einem Zeitabschnitt innerhalb des Zyklus zugeordnet sind und für diesen Zeitabschnitt eine herkömmliche Regelung, beispielsweise eine PID-Regelung ausführen. Durch die Vielzahl der parallel zueinander arbeitenden Regler ist es möglich, jedem Einzelregler die für ihn gültigen Parameter des Systems als Regelparameter zuzuordnen. Dieser Wert ist konstant, weil durch den erfindungsgemäßen Regler das Soll-Profil durch eine Vielzahl von Profilpunkten angenähert wird und jeder Profilpunkt einen konstanten Soll-Wert darstellt, für den konstante Systembedingungen gelten, sodass auch die Parametrisierung für diesen Profilpunkt festliegt, solange sich das System nicht ändert.

Die Reglerwerte werden vorzugsweise als Regelprofil am Ende eines Zyklus von Soll-Profil und Ist.Profil ausgegeben.

Die beigefügte Zeichnung dient zur Erläuterung der Erfindung. Es zeigen:
- Figur 1 -: eine schematische Darstellung einer Regleranordnung mit einem nichtkonstanten Soll-Profil und einem nichtlinearen geregelten System
- Figur 2 -: eine schematische Darstellung der Erfindung mit einer Vielzahl von für jeweils einen Zeitabschnitt zuständigen Einzelreglern.

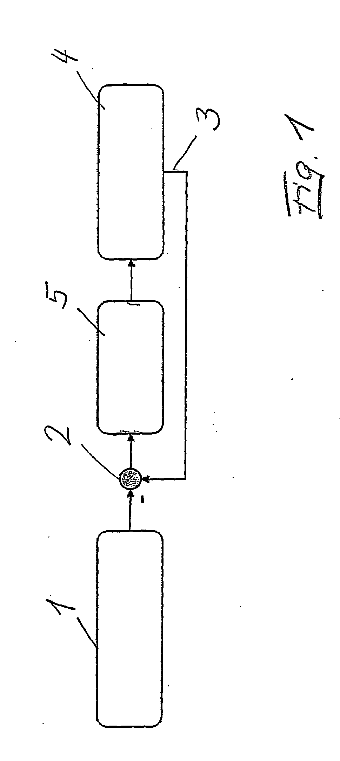

Das in Figur 1 dargestellte Regelsystem geht aus von einem vorgegebenen Soll-Profil 1, das beispielsweise die Kraftausübung auf einen künstlichen Fuß während eines Abrollvorganges darstellt. Das Soll-Profil wird in einem Vergleicher 2 mit einem Antwortprofil 3 eines geregelten, nicht linearen Systems 4 verglichen. Das Ergebnis des Vergleichers gelangt auf Regler 5, der als PID-Regler ausgebildet ist.

Das Antwortprofil (Ist-Profil) 3 kann eine starke Verzerrung gegenüber dem Soll-Profil 1 aufweisen. Da sich über die Zeit wegen des vorgegebenen Soll-Profils 1 die Bedingungen für das System 4 ständig ändern, besteht ein für einen herkömmlichen PID-Regler nicht lösbares Regelproblem.

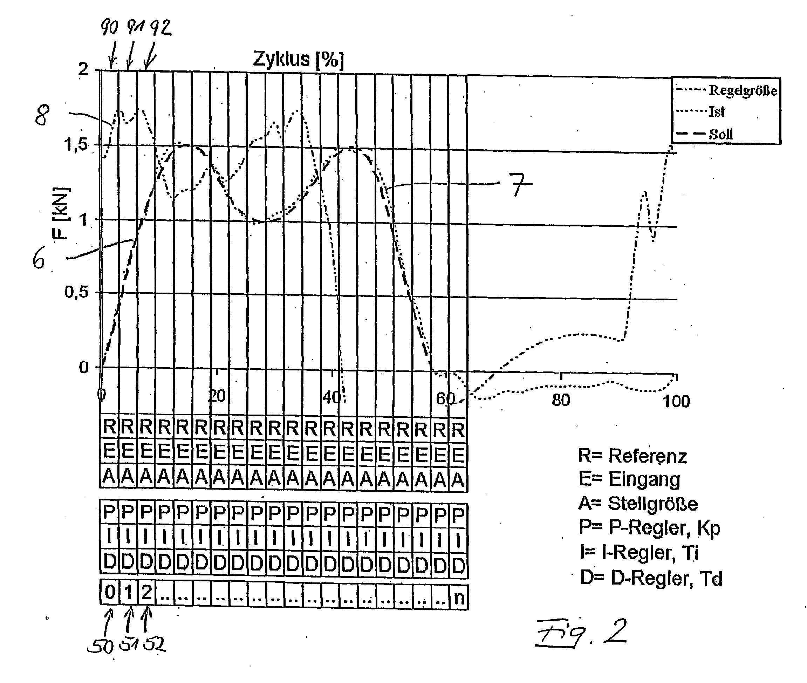

Erfindungsgemäß ist der PID-Regler 5 in eine Vielzahl von parallel geschalteten Einzelreglern 50, 51, 52 ... aufgeteilt, wie dies in Figur 2 schematisch dargestellt ist.

Figur 2 zeigt in einfacher Form eine Sollkurve (Soll-Profil- 6) und eine Istkurve 7. Aufgrund der Differenzbildung zwischen dem jeweiligen Soll-Wert und dem jeweiligen Ist Wert im Vergleicher 2 generiert der Regler 5, beispielsweise als einfacher Proportional-Regler, an seinem Ausgang ein Reglerprofil 8, durch das die Ist-Kurve 7 der Soll-Kurve 6 angenähert ist..

Dargestellt ist ein Zyklus 9 für die Kräfte, die beim Abrollvorgang eines künstlichen Fußes beim Gehen auftreten.

Die Periode 9 ist in zahlreiche gleiche Zeitabschnitte 90, 91, 92 ... aufgeteilt, denen jeweils ein PID-Einzelregler 50, 51, 52 ... zugeordnet ist. Die Einzelregler 50, 51, 52 erhalten aus dem Soll-Profil 6 den für den zugehörigen Zeitabschnitt 90, 91, 92 ... zugehörigen Soll-Wert R (Referenz) sowie einen Ist-Wert E (Eingang), woraus sich ein vom Einzelregler 50, 51, 52 zu verarbeitender Differenzwert ergibt, aus dem ein durch den Einzelregler 50, 51, 52 ... ein Reglersignal A (Ausgang) generiert wird.

Die Einzelregler 50, 51, 52, ... sind mit ihren üblichen Regelparametern Kp für den P-Anteil, Ti für den I-Anteil und Td für den D-Anteil so eingestellt, dass sie an die Antwort des nicht linearen Systems in dem Zustand im zugehörigen Zeitintervall 90, 91, 92 ... angepasst sind.

Figur 2 lässt erkennen, dass der Zyklus 9 in n + 1 Zeitintervalle 90, 91, 92 ... unterteilt ist und daher n + 1 Einzelregler 50, 51, 52 ... aufweist.

Der erfindungsgemäße Regler 5 kann Systeme ausregeln, die zu unterschiedlichen Zeiten innerhalb des Zyklus unterschiedliche Sprungantworten haben. Hierzu kann für jeden Kurvenpunkt eine andere Parametrisierung (Kp, Ti, Td) ausgebildet werden.

Die Berechnung der Ausgabewerte erfolgt vorzugsweise nach Beendigung eines kompletten Zyklus 9.

Für die Ausbildung einer Regelung für die Belastung eines künstlichen Fußes während eines Rollvorganges werden die neuen Ausgabewerte berechnet und daraus das neue Ausgabeprofil ausgegeben. Das Ausgabeprofil kann sich deutlich vom Soll- oder Ist-Profil unterschieden. Durch die erneute Belastung des Systems durch das neue Ausgabeprofil entsteht ein neues Ist-Profil, das als Eingangsgröße für den Regler benutzt wird, während das Soll-Profil konstant bleibt.

Voraussetzung für die Funktion des Reglers ist, dass das System an der Stelle (auch zu dem Zeitpunkt) im Profil antwortet, an der auch eine Änderung durch den Regler erwartet wird. Sollten im System Phasenverschiebungen auftreten, muss die Phasenverschiebung eliminiert werden. In dem oben erwähnten Prüfsystem kann dies durch eine simple Voreilung des Ausgabeprofils erreicht werden.

Für eine möglichst hohe Genauigkeit sollte eine möglichst hohe Anzahl von Einzelreglern 50, 51, 52 ... für die Unterteilung des Zyklus 9 vorgesehen werden. Die tatsächlich realisierte Anzahl hängt jedoch von der Implementation des Reglers und dem verfügbaren Speicher sowie von der Rechenleistung der digitalen Schaltung ab.

## Patentansprüche

1. Verfahren zur Einregelung eines sich in einem Zyklus (9) ändernden Systems auf ein nichtkonstantes zyklisches Sollprofil (1, 6) durch Vergleichen von gemessenen Ist-Werten (E) mit entsprechenden Soll-Werten (R) des Sollprofils (1, 6) und Ausgabe eines Regelwerts (A), wobei der Zyklus (9), des zyklischen Sollprofils (1, 6) in eine vorgegebene Anzahl von Zeitabschnitten (90, 91, 92 ... ) unterteilt wird, für jeden Zeitabschnitt (90, 91, 92 ...) ein Soll-Wert (R) des Sollprofils (1, 6) vorgegeben und ein aktueller Ist-Wert (E) bestimmt wird, **dadurch gekennzeichnet dass** für jeden Zeitabschnitt (90, 91, 92 ... ) mit einem eigenen Einzelregler (50, 51, 52 ... ) die Regelung auf der Basis von Soll-Wert (R) und Ist-Wert (E) gesondert ausgeführt wird.

2. Verfahren nach Anspruch 1, **dadurch gekennzeichnet, dass** jeder Einzelregler (50, 51, 52 ...) mit einer eigenen Parametrisierung (Kp, Ti, Td) der Regelfaktoren (P,I,D) versehen wird.

3. Verfahren nach Anspruch 1 oder 2, **dadurch gekennzeichnet, dass** die Reglerwerte (A) als Regelprofil (8) am Ende eines Zyklus (9) ausgegeben werden.

4. Verfahren nach einem der Ansprüche 1 bis 3, **gekennzeichnet durch** die Verwendung von PID-Regelungen.

5. Verfahren nach einem der Ansprüche 1 bis 4, **gekennzeichnet durch** die Verwendung von digitalen Einzelreglern (50, 51, 52 ...).

6. Verfahren nach einem der Ansprüche 1 bis 5, **dadurch gekennzeichnet, dass** die Regelung zur Steuerung der Belastung einer Prothese durch eine Prüfmaschine verwendet wird.

7. Verfahren nach Anspruch 6, **dadurch gekennzeichnet, dass** die Regelung zur Steuerung der Belastung eines künstlichen Fußes verwendet wird.

8. Regler für ein sich in einem Zyklus (9) änderndes System zur Einregelung auf ein nichtkonstantes zyklisches Sollprofil (1; 6), wobei der Regler eine Vielzahl von Einzelreglern (50, 51, 52 ...), eine Steuerschaltung, die jedem Einzelregler (50, 51, 52 ...) einen vorgegebenen Soll-Wert (R) und einen gemessenen Ist-Wert (E) zuordnet, und eine Ausgabeanordnung für die von Einzelreglern generierten Reglerwerte (A) aufweist, **dadurch gekennzeichnet, dass** die Steuerschaltung den Zyklus (9) des zyklischen Sollprofils in der Anzahl der Einzelregler (50, 51, 52 ...) entsprechende Abschnitte (90, 91, 92 ...) unterteilt.

9. Regler nach Anspruch 8, **dadurch gekennzeichnet, dass** die Ausgabeanordnung zur Ausgabe eines aus den Reglerwerten (A) am Ende eines Zyklus (9) gebildeten Ausgabeprofils (8) eingerichtet ist.

10. Regler nach Anspruch 8 oder 9, **dadurch gekennzeichnet, dass** die Einzelregler (50, 51, 52 ...) einzeln mit Regelparametern (Kp, Ti, Td) parametrisierbar sind.

11. Regler nach einem der Ansprüche 8 bis 10, **dadurch gekennzeichnet, dass** die Einzelregler (50, 51, 52 ... ) digitale Regler sind.

12. Regler nach einem der Ansprüche 8 bis 11, **dadurch gekennzeichnet, dass** die Einzelregler (50, 51, 52 ... ) PID-Regler sind.

13. Regler nach einem der Ansprüche 8 bis 12, **dadurch gekennzeichnet, dass** die ausgegebenen Reglerwerte (A) einer Steuereinrichtung zur Belastung einer Prothese durch eine Prüfmaschine zuführbar sind.

14. Regler nach Anspruch 13, **dadurch gekennzeichnet, dass** die Prüfmaschine für die Belastungen eines künstlichen Fußes ausgebildet ist.

## Claims

1. Method for adjusting a system that changes in a cycle (9) to a nonconstant cyclic target profile (1, 6) by comparing measured actual values (E) with appropriate target values (R) for the target profile (1, 6) and outputting a control value (A), the cycle (9) of the cyclic target profile (1, 6) being divided into a prescribed number of time periods (90, 91, 92 ...), and for each time period (90, 91, 92 ...) a target value (R) for the target profile (1, 6) being prescribed and a current actual value (E) being determined, **characterized in that** for each time period (90, 91, 92 ...) a dedicated single controller (50, 51, 52 ...) is used to execute the control separately on the basis of the target value (R) and the actual value (E).

2. Method according to Claim 1, **characterized in that** each single controller (50, 51, 52 ...) is provided with dedicated parameterization (Kp, Ti, Td) of the control factors (P, I, D).

3. Method according to Claim 1 or 2, **characterized in that** the controller values (A) are output as a control profile (8) at the end of a cycle (9).

4. Method according to one of Claims 1 to 3, **characterized by** the use of PID controllers.

5. Method according to one of Claims 1 to 4, **characterized by** the use of digital single controllers (50, 51, 52 ...).

6. Method according to one of Claims 1 to 5, **characterized in that** the control is used for controlling the load placed on a prosthesis by a testing machine.

7. Method according to Claim 6, **characterized in that** the control is used for controlling the load placed on an artificial foot.

8. Controller for a system that changes in a cycle (9) for adjustment to a nonconstant cyclic target profile (1; 6), the controller having a multiplicity of single controllers (50, 51, 52 ...), a control circuit which assigns each single controller (50, 51, 52 ...) a prescribed target value (R) and a measured actual value (E), and an output arrangement for the controller values (A) generated by single controllers, **characterized in that** the control circuit divides the cycle (9) of the cyclic target profile into sections (90, 91, 92 ...) corresponding to the number of single controllers (50, 51, 52 ...).

9. Controller according to Claim 8, **characterized in that** the output arrangement is set up to output an output profile (8) which is formed from the controller values (A) at the end of a cycle (9).

10. Controller according to Claim 8 or 9, **characterized in that** the single controllers (50, 51, 52 ...) are individually parameterizable using control parameters (Kp, Ti, Td).

11. Controller according to one of Claims 8 to 10, **characterized in that** the single controllers (50, 51, 52 ...) are digital controllers.

12. Controller according to one of Claims 8 to 11, **characterized in that** the single controllers (50, 51, 52 ...) are PID controllers.

13. Controller according to one of Claims 8 to 12, **characterized in that** the output controller values (A) can be supplied to a control device for the placement of a load on a prosthesis by a testing machine.

14. Controller according to Claim 13, **characterized in that** the testing machine is designed for the loads placed on an artificial foot.

## Revendications

1. Procédé pour réguler un système variable dans un cycle (9), à un profil de consigne (1, 6) cyclique non constant, par comparaison de valeurs effectives (E) mesurées avec des valeurs de consigne (R) correspondantes du profil de consigne (1, 6) et émission d'une valeur de régulation (A), procédé dans lequel on subdivise le cycle (9) du profil de consigne (1, 6) cyclique en un nombre prédéfini d'intervalles de temps (90, 91, 92 ...), on prédéfinit pour chaque intervalle de temps (90, 91, 92 ...) une valeur de consigne (R) du profil de consigne (1, 6), et on détermine une valeur réelle (E) actuelle, **caractérisé en ce que** pour chaque intervalle de temps (90, 91, 92 ...) on réalise séparément avec un dispositif de régulation individuel (50, 51, 62 ...) propre la régulation sur la base de la valeur de consigne (R) et de la valeur effective (E).

2. Procédé selon la revendication 1, **caractérisé en ce que** l'on munit chaque dispositif de régulation individuel (50, 51, 52 ...) avec un paramétrage (Kp, Ti, Td) propre des facteurs de régulation (P, I, D).

3. Procédé selon la revendication 1 ou 2, **caractérisé en ce que** l'on émet les valeurs de régulation (A) en tant que profil de régulation (8) à la fin d'un cycle (9).

4. Procédé selon l'une des revendications 1 à 3, **caractérisé par** l'utilisation de régulations PID.

5. Procédé selon l'une des revendications 1 à 4, **caractérisé par** l'utilisation de dispositifs de régulation individuels (50, 51, 52 ...) numériques.

6. Procédé selon l'une des revendications 1 à 5, **caractérisé en ce que** l'on utilise la régulation pour piloter la charge d'une prothèse par une machine de test.

7. Procédé selon la revendication 6, **caractérisé en ce que** l'on utilise la régulation pour piloter la charge d'un pied artificiel.

8. Dispositif de régulation pour un système variable dans un cycle (9), pour la régulation à un profil de consigne (1, 6) cyclique non constant, le dispositif de régulation présentant plusieurs dispositifs de régulation individuels (50, 51, 52 ...), un circuit de pilotage qui attribue à chaque dispositif de régulation individuel (50, 51, 52 ...) une valeur de consigne (R) prédéfinie et une valeur réelle (E) mesurée, et un agencement d'émission pour les valeurs de régulation (A) générées par les dispositifs de régulation individuels, **caractérisé en ce que** le circuit de pilotage subdivise le cycle (9) du profil de consigne cyclique en intervalles (90, 91, 92 ...) correspondant au nombre des dispositifs de régulation individuels (50, 51, 52 ...),

9. Dispositif de régulation selon la revendication 8, **caractérisé en ce que** l'agencement d'émission est agencé pour émettre un profil d'émission (8) formé à partir des valeurs de régulation (A) à la fin d'un cycle (9).

10. Dispositif de régulation selon la revendication 8 ou 9, **caractérisé en ce que** les dispositifs de régulation individuels (50, 51, 52 ...) sont paramétrables séparément avec des paramètres de régulation (Kp, Ti, Td).

11. Dispositif de régulation selon l'une des revendications 8 à 10, **caractérisé en ce que** les dispositifs de régulation individuels (50, 51, 52 ...) sont des dispositifs de régulation numériques.

12. Dispositif de régulation selon l'une des revendications 8 à 11, **caractérisé en ce que** les dispositifs de régulation individuels (50, 51, 52 ...) sont des dispositifs de régulation PID.

13. Dispositif de régulation selon l'une des revendications 8 à 12, **caractérisé en ce que** les valeurs de régulation (4) émises peuvent être envoyées à un dispositif de pilotage pour charger une prothèse grâce à une machine de test.

14. Dispositif de régulation selon la revendication 13, **caractérisé en ce que** la machine de test est adaptée pour charger un pied artificiel.
